(19) Europäisches Patentamt
European Patent Office
Office européen des brevets

(11) Numéro de publication : **0 376 813 B1**

# (12) FASCICULE DE BREVET EUROPEEN

(45) Date de publication du fascicule du brevet : **23.09.92 Bulletin 92/39**

(51) Int. Cl.$^5$ : **C02F 1/54**

(21) Numéro de dépôt : **89403600.3**

(22) Date de dépôt : **21.12.89**

## (54) Procédé d'épuration des eaux au moyen d'un floculant polymère.

(30) Priorité : **28.12.88 FR 8817306**

(43) Date de publication de la demande : **04.07.90 Bulletin 90/27**

(45) Mention de la délivrance du brevet : **23.09.92 Bulletin 92/39**

(84) Etats contractants désignés : **AT BE CH DE ES FR GB GR IT LI LU NL SE**

(56) Documents cités :
**EP-A- 0 068 955**
**EP-A- 0 202 780**
**WO-A-81/01007**
**US-A- 4 391 932**

(73) Titulaire : **ELF ATOCHEM S.A.**
**4 & 8, Cours Michelet La Défense 10**
**F-92800 Puteaux (FR)**

(72) Inventeur : **Candau, Françoise**
**3, rue de Lens**
**F-67000 Strasbourg (FR)**
Inventeur : **Buchert, Pascale**
**12, place des Arènes**
**F-60300 Senlis (FR)**
Inventeur : **Esch, Marc**
**23, rue Goethe**
**F-57800 Freyming-Merlebach (FR)**

(74) Mandataire : **Rochet, Michel**
**ELF ATOCHEM S.A. Département Propriété Industrielle 4-8, Cours Michelet La Défense 10 - Cedex 42**
**F-92091 Paris-La-Défense (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

La présente invention a pour objet un procédé d'épuration d'eaux usées mettant en oeuvre un nouvel agent floculant.

Des procédés d'épuration d'eaux usées utilisant des dispersions de polymères cationiques hydrosolubles sont déjà connus. Le brevet US-A-3.4O9.547 décrit notamment un procédé d'épuration d'eau au moyen de O,1 à 1O ppm d'un polymère d'ammonium quaternaire tel que celui dérivé du méthacrylate de diméthylaminoéthyle. Le brevet EP-B-O68.955 décrit des dispersions eau dans l'huile, stables pendant plus de 4 mois à 2O°- 25°C, comprenant :

– de 2O% à 55% d'un polymère à base d'acrylate de diméthylaminoéthyle quaternisé pur ou en mélange avec de l'acrylamide,

– de 2O% à 45% d'au moins un alcane normal en $C_{1O}$-$C_{13}$,

– de 1% à 5% d'un couple d'au moins deux agents émulsifiants dont l'un possède un HLB (balance hydrophyle-lipophile) de 3 à 5 et l'autre possède un HLB de 12 à 16, et

– le complément à 1OO% d'eau.

Ces dispersions, aptes en tant qu'agents de floculation pour la clarification d'eaux résiduaires, sont constituées de particules de tailles généralement comprises entre 2OO et 2 OOO nm et présentant un indice de polydispersité des tailles au moins égal à 2.

Le brevet US-A-4.588.5O8 décrit un mélange, utilisé pour la clarification des eaux, de deux polymères cationiques présentant une distribution bimodale de poids moléculaires. Le brevet GB-A-2.178.432 décrit l'emploi, pour la floculation des solides en suspension dans l'eau, de 1 à 1O.OOO ppm, par rapport auxdits solides, d'un mélange d'un polymère fortement cationique et d'au moins un polymère faiblement cationique. L'inconvénient évident des solutions proposées dans ces deux derniers documents réside dans la complexité résultant de la formation préalable de deux polymères differents.

La présente invention a pour objet de résoudre les problèmes précités de l'état de la technique, c'est-à-dire de procurer un nouvel agent floculant de constitution simple, thermodynamiquement stable et se présentant sous forme de particules de très faibles dimensions et essentiellement monodisperses, possédant un bon pouvoir de floculation pour le traitement des eaux usées.

Conformément à la présente invention, un tel agent floculant est constitué d'un micro-latex inverse comprenant un polymère d'au moins un monomère vinylique hydrosoluble cationique, le cas échéant copolymérisé avec au moins un monomère vinylique hydrosoluble anionique ou non-ionique, possédant un poids moléculaire au moins égal à $2.1O^6$, ledit micro-latex étant caractérisé en ce qu'il se présente sous forme de particules de diamètre compris entre 3O et 16O nm et en ce que son indice de polydispersité (défini comme le rapport du diamètre moyen en poids des particules de polymères à leur diamètre moyen en nombre) est compris entre 1,O5 et 1,2 environ.

Un tel agent floculant possède généralement les propriétés suivantes :

– stable thermodynamiquement, pendant une durée de 3O mois ou davantage.

– optiquement transparent.

– présente un comportement rhéologique newtonien jusqu'à des fractions volumiques de phase dispersée (somme du polymère gonflé d'eau et du tensioactif) atteignant 55 % environ,

– présente une viscosité limite à gradient de cisaillement nul (déterminée à 25°C) comprise entre 3 et 5OO + $1O^{-3}$kg $m^{-1}s^{-1}$ environ, selon la fraction volumique de la phase dispersée.

La classe d'agents floculants selon l'invention peut être avantageusement préparée par un procédé comprenant une première étape (a) de préparation d'une microémulsion inverse (du type eau-dans-huile) et une seconde étape (b) dans laquelle on soumet la microémulsion inverse obtenue dans l'étape (a) à des conditions de polymérisation, caractérisé en ce que l'étape (a) consiste à mélanger les constituants suivants :

(A) une solution aqueuse d'au moins un monomère vinylique hydrosoluble cationique, le cas échéant en mélange avec au moins un monomère vinylique hydrosoluble anionique ou non-ionique,

(B) une phase huileuse comprenant au moins un liquide hydrocarboné, et

(C) au moins un tensio-actif non ionique, en une proportion suffisante pour obtenir une microémulsion inverse, et ayant un HLB compris :

– soit entre 11 et 15 environ lorsque le monomère vinylique hydrosoluble cationique est seul ou en mélange avec un monomère vinylique hydrosoluble anionique,

– soit entre 7,5 et 13 environ lorsque le monomère vinylique hydrosoluble cationique est en mélange avec un monomère vinylique hydrosoluble non-ionique.

La concentration du monomère vinylique hydrosoluble cationique dans la solution aqueuse (A) est généralement comprise entre 5 et 8O% en poids, de préférence entre 1O et 6O % en poids.

Le liquide hydrocarboné présent dans la phase huileuse (B) est de préfèrence choisi parmi les hydrocarbures aliphatiques, linéaires, ramifiés, ou cycliques, ayant de 6 à 14 atomes de carbone, ou encore parmi les hydrocarbures aromatiques ayant de 6 à 15 atomes de carbone.

Pour obtenir 1OO parties en poids de la microémulsion inverse selon l'invention on mélange de préférence :

– de 25 à 65 parties en poids de la solution aqueuse (A),
– de 25 à 6O parties en poids de la phase huileuse (B), et
– de 1O à 27 parties en poids du tensio-actif non-ionique (C).

Des exemples de tensio-actifs non ioniques utilisables selon la présente invention sont notamment l'hexaoléate de sorbitol polyoxyéthylèné, le sesquioléate de sorbitan, le trioléate de sorbitan éthoxylé, le trioléate de sorbitan et le mono-oléate de sorbitol polyoxyéthylèné ainsi que les copolymères, comprenant au moins deux composants polymériques dérivés d'acides monocarboxyliques complexes liposolubles et un autre composant polymérique résidu d'un composé hydrosoluble contenant des motifs polyoxyalkylène, lesdits copolymères étant tels que ceux décrits dans la demande de brevet européen publiée sous le n° EP-A-O.258.12O ou leurs mélanges.

Des monomères vinyliques hydrosolubles cationiques entrant dans le cadre de la présente invention sont notamment des sels d'ammonium quaternaire insaturés répondant à la formule générale :

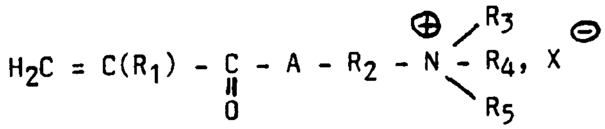

dans laquelle :

– A est un atome d'oxygène ou un groupe NH,
– $R_1$ est un atome d'hydrogène ou un radical méthyle,
– $R_2$ est un radical alkyle, linéaire ou ramifié, ayant de 2 à 4 atomes de carbone,
– $R_3$, $R_4$ et $R_5$, identiques ou différents, sont des radicaux alkyles, linéaires ou ramifiés, ou aryles, et
– X est choisi parmi les atomes d'halogène et les groupes $-C_2H_5-SO_4$ et $-CH_3-SO_4$.

Un sel d'ammonium quaternaire plus particulièrement préféré pour la constitution d'un agent floculant selon l'invention est le chlorure de méthacryloyloxyéthyltriméthylammonium.

Comme monomères vinyliques hydrosolubles anioniques utilisables selon la présente invention, on peut citer notamment l'acide acrylique, l'acide méthacrylique, l'acide 2-acrylamido 2-méthylpropanesulfonique et surtout leurs sels alcalins. Comme monomères vinyliques hydrosolubles non ioniques utilisables selon la présente invention, on peut citer notamment l'acrylamide, la méthacrylamide et la N-vinylpyrrolidone.

Dans le cadre de la présente invention, le monomère vinylique hydrosoluble cationique peut être mélangé en toutes proportions avec au moins un monomère vinylique hydrosoluble soit anionique soit non ionique tel que défini précèdemment. Toutefois dans de tels mélanges il est préfèrable que la proportion du monomère vinylique hydrosoluble cationique soit au moins égale à 5% en poids.

La proportion du tensio-actif non ionique dans la microémulsion inverse et le choix du HLB de ce tensio-actif sont deux éléments déterminants pour l'efficacité du procédé selon l'invention. D'une part, sauf exception liée à la nature particulière des monomères vinyliques hydrosolubles utilisés ou à la nature particulière de la phase huileuse, une microémulsion inverse stable (thermodynamiquement) ne pourra généralement pas être obtenue lorsque la proportion du tensio-actif dans le mélange des constituants (A), (B) et (C) est inférieure à 1O% en poids. D'autre part le choix du HLB du tensio-actif dépend des quatre facteurs suivants :

– polymérisation du monomère vinylique hydrosoluble cationique seul ou bien en mélange avec un comonomère,
– si le monomère cationique est en mélange avec un comonomère, nature (anionique ou non-ionique) et proportion de ce dernier,
– nature du monomère cationique, et
– nature de la phase huileuse (B).

Il est par ailleurs connu que dans ce type de procédé la quantité de tensio-actif requise dépend du HLB de celui-ci et passe généralement par une valeur minimale lorsque le HLB augmente. Etant donné que, pour des raisons d'ordre économique, on cherche le plus souvent à minimiser l'emploi de tensio-actif, cette valeur minimale constituera également un optimum industriel. Il est donc très important de déterminer dans chaque cas, en fonction des facteurs énumérés ci-dessus, le HLB du tensio-actif à utiliser. Pour illustrer cet aspect de l'invention, les exemples suivants peuvent être donnés : ainsi lorsque le chlorure de méthacryloyloxyéthyltriméthylammonium est polymérisé seul, la phase huileuse étant constituée de cyclohexane, il est préférable d'utiliser un tensio-actif (ou un mélange) non ionique ayant un HLB compris entre 12,8 et 13,2 environ. Lorsque le chlorure de méthacryloyloxyéthyltriméthylammonium est copolymérisé avec l'acrylamide, la phase huileuse étant constituée de cyclohexane, il est préférable d'utiliser un tensio-actif (ou un mélange) non ionique ayant un HLB compris entre 7,5 et 13 environ, ledit HLB étant de préférence corrélé à la fraction pondérale x du chlorure dans le mélange par la relation :

$$4x + 7,3 \leq HLB \leq 5,5x + 7,7$$

Compte tenu de l'enseignement technique qui précède, la détermination du HLB du tensio-actif à utiliser pour d'autres monomères est à la portée de l'homme de l'art.

Lors de la préparation de la microémulsion inverse, il est important que la température du mélange soit soigneusement contrôlée, en raison de la sensibilité à la température des microémulsions inverses en présence de tensio-actifs non ioniques. Cette influence de la température est d'autant plus sensible que la concentration en tensio-actif est plus proche de la teneur minimale requise pour obtenir une microémulsion inverse. En vue de réduire la teneur en tensio-actif nécessaire et afin de s'affranchir au maximum de l'influence de la température sur la stabilité des microémulsions-inverses, ces dernières seront dans la mesure du possible préparées à une température aussi voisine que possible de celle qui aura été choisie pour la polymérisation.

Au cours de la seconde étape (b) du procédé selon l'invention, la microémulsion inverse préparée au cours de l'étape (a) est soumise à des conditions de polymérisation :

- photochimique, par exemple par irradiation ultraviolette, et/ou
- thermique, par mise en présence d'un initiateur radicalaire hydrophobe (tel que l'azobisisobutyronitrile) introduit avec la phase huileuse (B) ou hydrophile (tel que le persulfate de potassium ou d'ammonium) introduit avec la solution aqueuse (A), ou bien en présence d'un système Redox dans lequel le persulfate est utilisé en combinaison avec au moins un réducteur choisi parmi les polyhydrophénols, le sulfite et le bisulfite de sodium, le diméthylaminopropionitrile, les diazomercaptans et les ferricyanures.

La polymérisation s'effectue rapidement et quantitativement et conduit à la formation de microlatex stables et transparents contenant une teneur élevée en (co)polymère hydrosoluble. La durée de polymérisation est par exemple de 5 à 26O minutes par voie photochimique à température ambiante, de 5 à 36O minutes par voie thermique (la durée étant naturellement une fonction inverse de la température). La température utilisable au cours d'une polymérisation par voie thermique est généralement comprise entre 2O et 9O°C environ.

Conformément à la présente invention, l'épuration des eaux est effectuée en mettant en oeuvre 1 à 1O.OOO ppm de l'agent floculant décrit précèdemment, par rapport aux solides en suspension dans l'eau à épurer. Cette proportion peut naturellement dépendre, comme le sait l'homme de l'art, de la nature physique et chimique des solides en suspension dans l'eau ainsi que de la teneur en solides dans l'eau.

Le procédé d'épuration selon l'invention permet de résoudre de manière simple et efficace les problèmes écologiques de clarification et de purification des eaux urbaines et des effluents aqueux industriels tout en utilisant un floculant capable de supporter une durée de stockage prolongée (pouvant couramment atteindre 3O mois ou davantage) et sans nécessiter la dissolution préalable d'un floculant en poudre.

Les exemples ci-après sont donnés à titre illustratif et non limitatif de la présente invention.

## EXEMPLE 1

37 g de cyclohexane et 13 g d'un mélange (ayant un HLB de 12,9) de monooléate de sorbitan polyoxyéthyléné (TWEEN 8O) et de sesquioléate de sorbitan (ARLACEL 83) sont mélangés sous agitation. Par ailleurs on dissout 25 g de chlorure de méthacryloyloxyéthyltriméthylammonium dans 25 g d'eau distillée, puis on ajoute cette solution au mélange de cyclohexane et tensio-actifs. La microémulsion ainsi obtenue, dans laquelle on introduit O,3 % en poids d'azobisisobutyronitrile par rapport au monomère, est dégazée pendant 3O minutes à 2O°C sous atmosphère d'azote en vue d'éliminer l'oxygène susceptible d'agir en tant qu'inhibiteur.

La microémulsion est alors irradiée sous ultra-violet au sein d'un réacteur de 5OO ml thermostaté à 2O°C. Après une heure de polymérisation on obtient un microlatex clair, présentant un poids moléculaire du polymère égal à $1O^7$ et un indice de polydispersité (tel que défini précédemment) égal à 1,15, le diamètre moyen des particules étants égal à 138 nm.

## EXEMPLE 2

Le microlatex obtenu conformément à l'exemple 1 est utilisé pour la clarification d'eaux usées, contenant 9 g de matières solides par litre, maintenues sous agitation mécanique à environ 7OO tours par minute.

Ayant introduit rapidement le microlatex au sein du liquide à raison de 6 g par kg de matières solides, on coupe l'agitation après 5 secondes. Au bout de 25 minutes, on observe que la hauteur de boue décantée est égale à 61% de la hauteur initiale de boue traitée.

EXEMPLE 3 (comparatif)

On pratique le test de sédimentation des boues dans les conditions de l'exemple 2 en remplaçant le microlatex de l'exemple 1 par un latex polymère cationique en poudre commercialisé par la société FLOERGER sous la dénomination FO 965O G. Après 25 minutes de sédimentation, la hauteur de boue décantée est encore égale à 74% de la hauteur initiale de boue traitée.

## Revendications

1. Procédé d'épuration des eaux mettant en oeuvre 1 à 1O.OOO ppm par rapport aux solides en suspension dans l'eau. d'un agent floculant constitué d'un micro-latex inverse comprenant un polymère d'au moins un monomère vinylique hydrosoluble cationique, le cas échéant copolymérisé avec au moins un monomère vinylique hydrosoluble anionique ou non-ionique, possédant un poids moléculaire au moins égal à $2.1O^6$, ledit micro-latex étant caractérisé en ce qu'il se présente sous forme de particules d'un microlatex de diamètre compris entre 3O et 16O nm et en ce que son indice de polydispersité est compris entre 1,O5 et 1,2.

2. Procédé selon la revendication 1, caractérisé en ce que le microlatex présente une viscosité limite à gradient de cisaillement nul à 25°C comprise entre 3 et 5OO $kgm^{-1}s^{-1}$.

3. Procédé selon l'une des revendications 1 à 2, caractérisé en ce que le microlatex est préparé à partir d'une microémulsion inverse du type eau-dans-huile comprenant :
   (A) une solution aqueuse d'au moins un monomère vinylique hydrosoluble cationique, le cas échéant en mélange avec au moins un monomère vinylique hydrosoluble anionique ou non-ionique,
   (B) une phase huileuse comprenant au moins un liquide hydrocarboné, et
   (C) au moins un tensio-actif non ionique, en une proportion suffisante pour obtenir une microémulsion inverse, et ayant un HLB compris :
      – soit entre 11 et 15 environ lorsque le monomère vinylique hydrosoluble cationique est seul ou en mélange avec un monomère vinylique hydrosoluble anionique,
      – soit entre 7,5 et 13 environ lorsque le monomère vinylique hydrosoluble cationique est en mélange avec un monomère vinylique hydrosoluble non-ionique.

4. Procédé selon la revendication 3, caractérisé en ce que la microémulsion inverse comprend, pour 1OO parties en poids :
   – de 25 à 65 parties en poids de solution aqueuse (A),
   – de 25 à 6O parties en poids de phase huileuse (B), et
   – de 1O à 27 parties en poids de tensio-actif non-ionique (C).

5. Procédé selon l'une des revendications 1 à 4, caractérisé en ce que le monomère vinylique hydrosoluble cationique est le chlorure de méthacryloyloxyéthyltriméthylammonium.

## Claims

1. Process for purifying water using 1 to 1O,OOO ppm, with respect to the solids suspended in the water, of a flocculating agent consisting of a reverse micrometer comprising a polymer of at least one water-soluble cationic vinyl monomer, which may be copolymerized with at least one water-soluble cationic vinyl monomer, which may be copolymerized with at least one water-soluble anionic or nonionic vinyl monomer, possessing a molecular weight at least equal to $2 \times 1O^6$, the said micrometer being characterized in that it is in the form of particles of a micrometer of between 3O and 16O nm in diameter and in that its polydispersity index is between 1.05 and 1.2.

2. Process according to claim 1, characterized in that the micrometer has a limiting viscosity at a shear gradient of zero at 25°C of between 3 and 5OO $kgm^{-1}s^{-1}$.

3. Process according to either of claims 1 and 2, characterized in that the micrometer is prepared from a reverse microemulsion of the water-in-oil type comprising:
   a) an aqueous solution of at least one water-soluble cationic vinyl monomer, which may be mixed with

at least one water-soluble anionic of non-ionic vinyl monomer,
b) an oily phase comprising at least one liquid hydrocarbon and,
c) at least one non-ionic surfactant, in a proportion sufficient to obtain a reverse microemulsion, and having a HLB of:
- either between 11 and 15 approximately when the watersoluble cationic vinyl monomer is on its own or as a mixture with a water-soluble anionic vinyl monomer,
- or between 7.5 and 13 approximately when the watersoluble cationic vinyl monomer is in a mixture with a water-soluble non-ionic vinyl monomer.

**4.** Process according to claim 3, characterized in that the reverse microemulsion comprises, per 1OO parts by weight:
- from 25 to 65 parts by weight of an aqueous solution (A)
- from 25 to 6O parts by weight of oily phase (B), and
- from 1O to 27 parts by weight of non-ionic surfactant (C).

**5.** Process according to one of claims 1 to 4, characterized in that the water-soluble cationic vinyl monomer is methacryloyloxyethyltrimethylammonium chloride.

## Patentansprüche

**1.** Verfahren zur Wasserreinigung durch Einsatz von 1 bis 10'000 ppm, bezogen auf die im Wasser suspendierten Festkörper, eines Flockungsmittels bestehend aus einem Mikroinvertlatex enthaltend ein Polymerisat von mindestens einem kationischen, wasserlöslichen Vinylmonomeren, das gegebenenfalls mit mindestens einem anionischen oder nichtionischen, wasserlöslichen Vinylmonomer mit einem Molekulargewicht von mindestens gleich $2.10^6$ copolymerisiert ist, dadurch gekennzeichnet, daß der genannte Mikrolatex in Form von Partikeln mit einem Durchmesser zwischen 30 und 160 nm vorliegt und daß sein Polydispersitätsfaktor 1,05 bis 1,2 beträgt.

**2.** Verfahren nach Anspruch 1, dadurch gekennzeichnet, daß der Mikrolatex bei einem Schergefälle Null bei 25°C eine Grenzviskosität im Bereich von 3 bis 500 kg $m^{-1}s^{-1}$ aufweist.

**3.** Verfahren nach einem der Ansprüche 1 und 2, dadurch gekennzeichnet, daß der Mikrolatex aus einer Mikroinvertemulsion vom Typ Wasser-in-Öl, hergestellt wird, die enthält:
(A) eine wäßrige Lösung von mindestens einem kationischen, wasserlöslichen Vinylmonomeren, das gegebenenfalls in Mischung mit mindestens einem anionischen oder nichtionischen, wasserlöslichen Vinylmonomeren vorliegt,
(B) eine ölige Phase enthaltend mindestens einen flüssigen Kohlenwasserstoff und
(C) mindestens ein nichtionogenes Tensid, in einem für die Herstellung einer Invertemulsion ausreichenden Verhältnis und mit einem HLB-Bereich
- entweder von ungefähr 11 bis 15, wenn das kationische, wasserlösliche Vinylmonomere allein oder in Mischung mit einem anionischen, wasserlöslichen Vinylmonomeren vorhanden ist,
- oder von ungefähr 7,5 bis 13, wenn das kationische, wasserlösliche Vinylmonomere in Mischung mit einem nichtionischen, wasserlöslichen Vinylmonomeren vorliegt.

**4.** Verfahren nach Anspruch 3, dadurch gekennzeichnet, daß die Mikroinvertemulsion auf 100 Gewichtsteile enthält:
- 25 bis 65 Gewichtsteile einer wäßrigen Lösung (A),
- 25 bis 60 Gewichtsteile einer öligen Phase (B), und
- 10 bis 27 Gewichtsteile eines nichtionogenen Tensides (C).

**5.** Verfahren nach einem der Ansprüche 1 bis 4, dadurch gekennzeichnet, daß das kationische, wasserlösliche Vinylmonomere Methacryloyloxyethyltrimethylammoniumchlorid ist.